# NEUE EUROPÄISCHE PATENTSCHRIFT

(11) **EP 1 025 267 B2**
(45) Veröffentlichungstag und Bekanntmachung des Hinweises auf die Entscheidung über den Einspruch: **15.09.2004**
(45) Hinweis auf die Patenterteilung: 28.11.2001
(21) Anmeldenummer: 98952689.2
(22) Anmeldetag: 02.10.1998
(51) Int. Cl.: C21C 5/52, F27B 3/18

(54) **VERFAHREN ZUM SCHMELZEN VON FEINKÖRNIGEM, DIREKT REDUZIERTEM EISEN IN EINEM ELEKTROLICHTBOGENOFEN**
METHOD FOR SMELTING FINE GRAINED DIRECT REDUCED IRON IN AN ELECTRIC ARC FURNACE
PROCEDE DE FUSION DE FER DE REDUCTION DIRECTE A GRAIN FIN DANS UN FOUR A ARC ELECTRIQUE

(30) Priorität: 07.10.1997 DE 19744151
(43) Veröffentlichungstag der Anmeldung: 09.08.2000
(73) Patentinhaber: Outokumpu Oyj, 02200 Espoo (FI)
(72) Erfinder: EICHBERGER, Heinz, D-65812 Bad Soden (DE); SCHIMO, Siegfried, D-61381 Friedrichsdorf (DE); STROEDER, Michael, D-61267 Anspach (DE); WELLS, William, Oakville, Ontario (CA)
(74) Vertreter: Lenz, Nanno Matthias
(86) Internationale Anmeldenummer: PCT/EP1998/006276
(87) Internationale Veröffentlichungsnummer: WO 1999/018245

(56) Entgegenhaltungen:
- EP-A- 0 637 634
- EP-A- 0 657 549
- DE-A- 1 508 222
- DE-A- 3 326 505
- DE-A- 19 608 530
- US-A- 4 986 847
- SCHLIEPHAKE H ET AL: "EINSATZ VON EISENSCHWAMM IN DEN ELEKTROLICHTBOGENOFEN DER ISPAT-HAMBURGER STAHLWERKE" STAHL UND EISEN, Bd. 115, Nr. 5, 15. Mai 1995, Seiten 69-72, XP000511497

## Beschreibung

Die Erfindung betrifft ein Verfahren zum Schmelzen von feinkörnigem, direkt reduziertem Eisen (DRI) in einem Elektrolichtbogenofen, der ein Bad aus flüssigem Eisen und auf dem flüssigen Eisen eine Schaumschlackeschicht enthält, wobei das DRI während des Ofenbetriebs durch mindestens eine Lanze, die durch den Deckel des Ofens hindurchgeführt ist, von oben durch die Mündung der Lanze in die Schaumschlackeschicht und auf das flüssige Eisen geleitet wird, wobei jede Lanze vertikal verstellbar ausgebildet ist. Direkt reduziertes Eisen wird in der Fachwelt auch als Eisenschwamm oder DRI (direct reduced iron) bezeichnet.

Ein solches Verfahren wird in DE 196 08 530 Al beschrieben, wobei das DRI mit einem hauptsächlich aus CO₂ bestehenden Fördergas durch die Lanze auf das Eisenbad geblasen wird. Dadurch wird die bei der Verwendung von Luft als Fördergas auftretende Bildung von FeO und die damit verbundene ungenügende Erzeugung von Schaumschlacke, sowie die durch das Einblasen von Luftstickstoff in die Stahlschmelze hervorgerufene Abnahme der Stahlqualität vermieden.

Im US-Patent 5 433 767 wird die Direktreduktion von feinkörnigem Eisenerz in mindestens zwei Wirbelschichten beschrieben, wobei man heißes Reduktionsgas auch als Fluidisierungsgas verwendet. Man erzeugt feinkörnigen Eisenschwamm, der anschließend in einem Schmelzreaktor bei Temperaturen von 1500 bis 1700°C verflüssigt und weiter reduziert wird. Die Erzeugung von feinkörnigem Eisenschwamm ist auch im US-Patent 5 603 748 beschrieben.

DE-A-1508222 offenbart das drucklose kontinuierliche Zugeben von kleinstückigem Eisenschwamm in einer Menge bis zu 80% der gesamten Ofenschmelze während der Stahlherstellung in einem Elektrolichtbogenofen. Der vorreduzierte Eisenschwamm wird mittels an Öffnungen in der Decke des Elektrolichtbogenofens starr befestigter Beschickungsrohre 48, 50, 52 in die Schlackenschicht fallengelassen. Ein Schaumzustand der Schlacke und eine Dicke der Schaumschlackenschicht von 30 cm sind in Beispiel 6 erwähnt.

DE-A-33 26 505 beschreibt eine Beschichungsvorrichtung für metallurgische, Öfen, insbesondere Elektrolichtbogenöfen, mit einem höhenverstellbaren Fallrohr, das durch eine Öffnung, im Ofendeckel hindurch bis nahe an die Oberfläche der im Ofen befindlichen Metallschmelze abgesenkt ist und durch welches Möller-Feingut ohne Benutzung eines Fördergases auf die Metallschmelze fallen kann.

Der Erfindung liegt die Aufgabe zugrunde, moglichst viel feinkörniges direkt reduziertes Eisen (DRI), auch im heißen Zustand, auf einfache Weise weitgehend verlustfrei unter Bildung geringer Abgasmengen während des Ofenbetriebs dem Eisenbad zuzuführen. Erfindungsgemäß gelingt dies beim eingangs genannten Verfahren durch, die Merkmale des Anspruchs 1. Das allein durch die Schwerkraft und ohne die Benutzung eines Fördergases zugeführte DRI füllt in einer Menge entsprechend 85-100% der gesamten Aufgabemenge an Eisenmaterial durch die Lanze oder Lanzen direkt in die auf dem Eisenbad befindliche Schaumschlacke. Neben dem feinkörnigen DRI kann auch anderes körniges oder stückiges Eisenmaterial, etwa Stahlschrott, heißbrikettiertes Eisen oder Roheisen in das Eisenbad gegeben werden.

Während des Ofenbetriebs steigen aus dem Eisenbad ständig Gase auf, die nach oben durch den Deckel des Ofens als Abgas abgeführt werden. Es ist aus Kostengründen erwünscht, die Abgasmenge gering zu halten. Das eingetragene DRI gelangt zunächst in die mehr oder weniger schaumige Schlackeschicht, wo es entweder direkt aufgeschmolzen wird oder durch sein Gewicht und die Bewegungen des Bades, die durch die elektrischen Ströme entstehen, in das Eisenbad einsinkt. Die Schaumschlackeschicht verhindert, daß über die Lanze eingebrachtes feinkörniges DRI mit den aufsteigenden Gasen mitgerissen und aus dem Ofen ausgetragen wird, was zu erhöhten Eisenverlusten führen würde. Durch Verzicht auf ein durch die Lanze geblasenes Fördergas werden diese Verluste gering gehalten. Mitgerissenes Eisen kann sich auch als Anbackung im oberen Bereich des Ofens oder in den Abgasleitungen festsetzen und so zu Unterbrechungen im Ofenbetrieb führen.

Der Elektrolichtbogenofen kann in bekannter Weise mit Gleichstrom oder Wechselstrom betrieben werden. Es ist auch bekannt, die durch den Ofendeckel eingeführten Elektroden vertikal bewegbar auszubilden, und während des Ofenbetriebs allmählich anzuheben, so daß ihr Abstand zu der Badoberfläche während des Chargenbetriebs etwa konstant bleibt.

Das feinkörnige DRI wird durch eine oder mehrere Lanzen von oben durch den Ofendeckel auf das Eisenbad gegeben, wobei man die Lanze oder Lanzen mit Wasserkühlung ausrüsten kann, falls erforderlich. Zweckmäßigerweise verhindert man, daß die Mündung der Lanze oder Lanzen mit dem flüssigen Eisen des Eisenbads in Berührung kommt. Jeder Lanze ist vertikal verstellbar ausgebildet, wobei ihre Mündung während des Ofenbetriebs mit etwa konstantem Abstand über der Oberfläche des Eisenbads gehalten wird. Eine Möglichkeit ist, die Lanze ebenso wie die Elektrode in Abhangigkeit vom steigenden Eisenbadspiegel nach oben zu ziehen. Zweckmäßigerweise beträgt der Abstand der Mündung jeder Lanze von der Oberfläche des Eisenbads 3 bis 100 cm und zumeist 5 bis 50 cm. Dabei wird dafür gesorgt, daß die Lanzenmündung stets innerhalb der Schaumschlackeschicht gehalten wird, damit möglichst kein DRI durch aufsteigende Gase nach oben zum Ofendeckel mitgerissen wird.

Durch separate Zugabe von Kohlenstoff und Sauerstoff kann man in an sich bekannter Weise dafür sorgen, daß sich eine stabile Schaumschlackeschicht auf dem Eisenbad ausbildet und dort während des Ofenbetriebs erhalten bleibt. Diese Schicht stellt eine Reaktionszone dar, die das feinkörnige DRI vor Reoxidation schützt. Gleichzeitig erlaubt sie das Eintauchen der Elektrode (n), um sie vor Oxidation zu schützen und die Wärmeübertragung vom Lichtbogen auf die Schmelze zu verbessern.

Dem Eisenbad werden durch Unterbaddüsen kohlenstoffhaltiges Material und O₂-haltiges Gas zugeführt. Das kohlenstoffhaltige Material kann fest, flüssig oder gasförmig sein, als O₂-haltiges Gas wird üblicherweise technisch reiner Sauerstoff verwendet. Die Unterbaddüsen können beliebig angeordnet werden, z. B. im Ofenboden oder in den Seitenwänden. Zweckmäßigerweise weist der Gasraum über der Schaumschlacke einen oder mehrere Injektoren zum Einleiten von O₂-hal tigem Gas auf, um dort für teilweise Nachverbrennung von CO zu sorgen.

Das Eisenbad des Ofens besteht üblicherweise zu mindestens 90 Gew.-% aus flüssigem Eisen. Man kann den Ofen zum Erzeugen von Roheisen oder flüssigem Stahl benutzen. Das flüssige Metall wird aus dem Ofen mit Temperaturen im Bereich von 1300 bis 1700°C und vorzugsweise mit mindestens 1350°C im Falle von Roheisen und mindestens 1550°C im Falle von Stahl abgezogen.

Ausgestaltungsmöglichkeiten des Verfahrens werden mit Hilfe der Zeichnung erläutert. Es zeigt:
- Fig. 1:: einen vertikalen Schnitt nach der Linie I-I in Fig. 2 durch einen mit Gleichstrom betriebenen Elektrolicbtbogenofen in schematisierter Darstellung,
- Fig. 2:: einen horizontalen Schnitt nach der Linie II-II in Fig. 1,
- Fig. 3:: einen mit Wechselstrom betriebenen Elektrolichtbogenofen in der Darstellung analog zu Fig.1, geschnitten nach der Linie III-III in Fig. 4 und
- Fig. 4:: einen horizontalen Schnitt entlang der Linie IV -IV in Fig. 3.

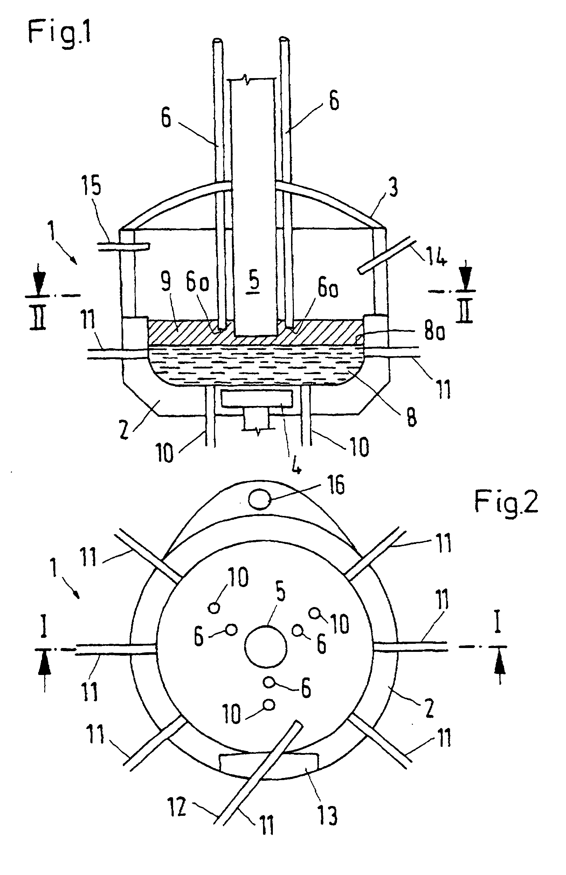

Der Elektrolichtbogenoten (1) der Fig. 1 und 2 weist einen ausgemauerten Kerd (2) und einen abnehmbaren Deckel (3) auf. Der Herd ist mit mindestens einer Bodenelektrode (4) versehen. Durch Öffnungen im Deckel (3) durchgeführt, ragen eine obere Elektrode (5) und drei innen hohle Lanzen (6) von oben in das Innere des Ofens, von denen in Fig. 1 nur zwei zu sehen sind. Die Zahl der oberen Elektroden (5) und der Lanzen (6) kann auch anders als in der Zeichnung gewählt werden. Die Lanzen (6) sind mit einer Wasserkühlung versehen, was in der Zeichnung nicht dargestellt ist.

Während des Betriebs befindet sich im Ofen (1) ein Eisenbad (8), das bis zum Badspiegel (8a) reicht. Über dem Badspiegel (8a) entsteht während des Ofenbetriebs eine Schicht (9) aus schaumiger Schlacke, die erwünscht ist. Durch Unterbaddüsen (10) und (11) leitet man kohlenstoffhaltiges Material und/oder O₂-haltiges Gas in das Eisenbad (8). Durch eine Doppellanze (12)-vgl. Fig. 2 - kann man Sauerstoff und kohlenstoffhaltiges Material durch die geöffnete Ofentür (13) in die Schlakkeschicht (9) blasen und dabei in an sich bekannter Weise die Schaumbildung verstärken. Mit seitlichen, schräg über dem Bad angeordneten Injektoren (14) kann in bekannter Weise Sauerstoff auf das Bad geblasen werden. Horizontale Injektoren (15) dienen in ebenfalls bekannter Weise der Sauerstoffzufuhr, um CO nachzuverbrennen.

Die obere Elektrode (5) kann, was ebenfalls bekannt ist, vertikal verstellt werden, so daß ihr Abstand zum Badspiegel (8a) bei zunehmendem Flüssigkeitsstand des Eisenbads etwa konstant gehalten wird. Durch die Lanzen (6) wird das feinkörnige DRI von einem nicht dargestellten Vorratsbehälter in den Ofen (1) eingebracht, so daß es ohne nennenswerte Verluste vom Eisenbad (8) aufgenommen wird. Zu diesem Zweck befinden sich die Mündungen (6a) der Lanzen (6) in relativ kurzer Entfernung über dem Badspiegel (8a) in der Schaumschlackeschicht (9). Ebenso wie die obere Elektrode (5) können auch die Lanzen (6) vertikal aufwärts bewegt werden, damit der gewünschte konstante Abstand der Mündungen (6a) der Lanzen (6) vom Badspiegel (8a) eingehalten wird. Dieser Abstand liegt üblicherweise im Bereich von 3 bis 100 cm und vorzugsweise 5 bis 50 cm, und er wird während des Ofenbetriebs vorzugsweise konstant gehlaten. Das DRI kann auch heiß, z. B. mit Temperaturen von 300 bis 1000°C, von einer Reduktionsanlage kommend, durch die Lanzen (6) in den Ofen eingetragen werden.

Der Ofen (1) wird chargenweise betrieben, und man zieht am Ende einer Einschmelzphase flüssiges Roheisen oder flüssigen Stahl durch die verschließbare Abstichöffnung (16) ab, vgl. Fig. 2.

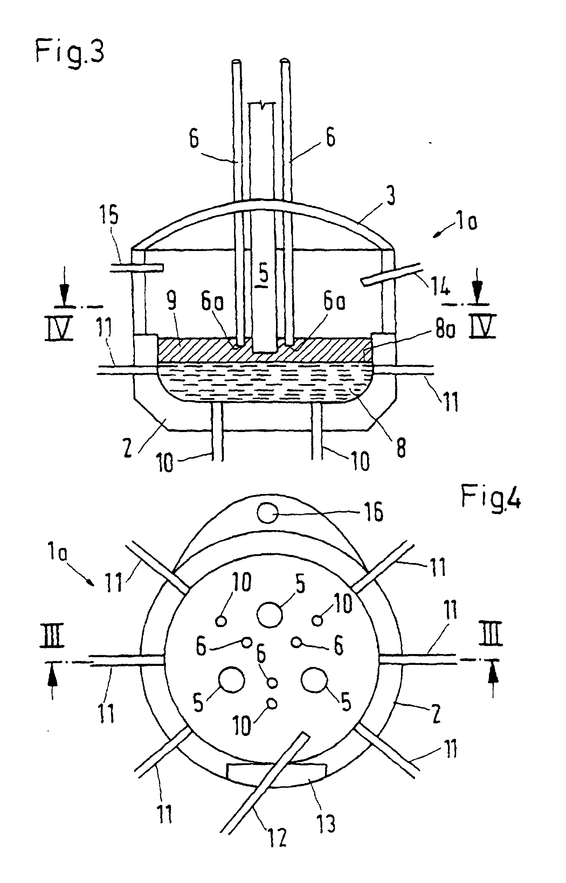

Der mit Wechselstrom betriebene Elekcrolichcbogenofen (1a) der Fig. 3 und 4 weist drei obere Elektroden (5) auf, von denen in Fig. 3 nur eine zu sehen ist. Im übrigen haben die Bezugsziffern die bereits zusammen mit Fig. 1 und 2 erläuterte Bedeutung.

### Beispiel:

Es wird mit einem mit 3-Phasen-Wechselstrom betriebenen Elektrolichtbogenofen gearbeitet, wie er in Fig. 3 und 4 dargestellt ist. Der Ofen ist kippbar ausgebildet. Der Herd (2) hat ein Fassungsvermögen von 150 t Eisenschmelze, der Strom wird von einem Transformator von 100 MVA geliefert. Die drei Elektroden (5) bestehen aus Graphit, ihr Abstand vom Eisenbad wird konstant bei 5 cm gehalten.

Bevor nach einem längeren Stillstand das erste DRI in den Ofen gegeben wird, erzeugt man zunächst durch teilweises Schmelzen von 40 t Stahlschrott ein Flüssigkeitsbad von 1560°C. Durch drei wassergekühlte Lanzen (6) gibt man diesem Bad DRI mit einer oberen Körnungsgrenze von 1,2 mm auf, das aus einer Feinerz-Direktreduktionsanlage kommt und eine Temperatur von 650°C aufweist. Das DRI enthält. neben metallischem Eisen noch 7 Gew. -% FeO, 4 Gew.-% SiO₂, 2 Gew.-% Al₂O₃ und 1 Gew.-% C. Die Mündungen (6a) der Lanzen (6) haben einen Abstand von 8 cm vom Badspiegel (8a), der geregelt und über die gesamte Einschmelzphase konstant gehalten wird. Die Zufuhrgeschwindigkeit an direkt reduziertem Eisen beträgt 1,2 t/min pro Lanze.

Durch die Unterbaddüsen (11) leitet man pro Minute 5 Nm³ technisch reinen Sauerstoff und 25 kg Kohlenstoff in Form von leichtem Heizöl in den Ofen, zusätzlich werden 300 kg Kalk pro Minute zugeführt. Darüber hinaus werden durch die Doppellanze (12), die in an sich bekannter Weise verstellbar ausgebildet ist und die in die Schaumschlackeschicht (9) eintaucht, geringe Mengen Sauerstoff und Kohlenstoff eingeblasen, um die Bildung einer stabilen Schaumschlackeschicht zu unterstützen. Man erzeugt eine Stahlschmelze von 1630°C, die nach einer Betriebszeit von einer Stunde aus dem Ofen abgezogen wird. Die dem Ofen zugeführten Mengen an DRI, Kohlenstoff, Sauerstoff und Kalk ergeben bei der Temperatur von 1630°C eine Stahlmenge von 150 t mit einem C-Gehalt von 0,1 Gew.-%. Die gebildete Schlacke hat eine Basizität (Gewichtsverhältnis CaO/SiO₂) von 2,5. Nach dem Abstich bleiben 30 t des Stahis im Ofen, damit bei der nächsten Schmelze sofort mit der Zufuhr von DRI begonnen werden kann, ohne daß Stahlschrott aufgeschmolzen werden muß.

## Patentansprüche

1. Verfahren zum Schmelzen von feinkörnigem, direkt reduziertem Eisen (DRI) in einem Elektrolichtbogenofen, der ein Bad aus flüssigem Eisen und auf dem flüssigen Eisen eine Schaumschlackeschicht enthält, wobei das DRI während des Ofenbetriebs durch mindestens eine Lanze, die durch den Deckel des Ofens hindurchgeführt ist, von oben durch die Mündung der Lanze(n) in die Schaumschlackeschicht und auf das flüssige Eisen geleitet wird, wobei jede Lanze vertikal verstellbar ausgebildet ist,
**dadurch gekennzeichnet, daß** das DRI allein durch die Schwerkraft und ohne die Benutzung eines Fördergases durch die Lanze(n) auf das Eisenbad fällt,
daß jede Lanzenmündung während des Ofenbetriebs mit etwa konstantem Abstand von 3 bis 100 cm über der Oberfläche des Eisenbads gehalten wird und sich in der Schaumschlackeschicht befindet,
daß der Anteil des durch die Lanze(n) dem Eisenbad zugeführten DRI an der gesamten Aufgabemenge an Eisenmaterial 85 bis 100 Gew.-% beträgt, und
daß das DRI zu mindestens 80 Gew.-% eine Körnung von höchstens 3 mm aufweist.

2. Verfahren nach Anspruch 1, **dadurch gekennzeichnet, daß** kohlenstoffhaltiges Material und O₂-haltiges Gas über Düsen in den Ofen eingeleitet wird.

3. Verfahren nach Anspruch 1, **dadurch gekennzeichnet, daß** das DRI mit Temperaturen im Bereich von 300 bis 1000°C in den Ofen geleitet wird.

4. Verfahren nach Anspruch 1, **dadurch gekennzeichnet, daß** das Eisenbad die Qualität von Roheisen oder Stahl aufweist.

## Claims

1. A process for smelting fine-grained, direct-reduced iron (DRI) in an electric arc furnace which contains a bath of molten iron and a foamed slag layer on the molten iron, wherein the DRI during operation of the furnace is passed through at least one lance which passes through the cover of the furnace, from above through the mouth of the lance(s) into the foamed slag layer and on to the molten iron, wherein each lance is vertically adjustable,
**characterized in that** the DRI falls through the lance(s) on to the iron bath solely through the force of gravity and without using a conveying gas,
that each lance mouth is held at an approximately constant distance of 3 to 100 cm above the surface of the iron bath during furnace operation and is located in the foamed slag layer,
that the proportion of the DRI fed through the lance(s) to the iron bath relative to the total amount of iron material charged is 85 to 100% by weight, and
that the DRI comprises to at least 80% by weight a grain size of at most 3 mm.

2. A process according to Claim 1, **characterized in that** carbon-containing material and O₂-containing gas is introduced into the furnace through nozzles.

3. A process according to Claim 1, **characterized in that** the DRI is passed into the furnace at temperatures in the range of 300 to 1000°C.

4. A process according to Claim 1, **characterized in that** the iron bath has the quality of pig iron or steel.

## Revendications

1. Procédé de fusion de fer de réduction directe (DRI) à grain fin, dans un four à arc électrique, qui contient un bain de fer liquide et sur le fer liquide une couche de scories sous forme de mousse, le DRI étant envoyé pendant le fonctionnement du four par au moins une lance qui passe à travers le couvercle du four, par le haut, par l'embouchure de(s) la lance(s) dans la couche de scories sous forme de mousse et sur le fer liquide, chaque lance étant constitué de manière à pouvoir la déplacer verticalement,
**caracterisé en ce que** le DRI tombe seulement par la force de gravité, sans l'utilisation d'un gaz transporteur dans la/les lance(s) sur le bain de fer,
**en ce que** chaque embouchure de lance est maintenue pendant le fonctionnement du four à une distance à peu près constante de 3 à 100 cm au-dessus de la surface du bain de fer et se trouve dans la couche de scories sous forme de mousse,
**en ce que** la proportion du DRI apportée au bain de fer par la/les lance(s) représente de 85 à 100% du poids de la quantité totale de matière de fer chargée, et
**en ce que** le DRI comprend au moins 80% en poids d'une granulométrie d'au plus 3 mm.

2. Procédé suivant la revendication 1, **caracterisé en ce que** le de matière carbonacée et de gaz contenant de l'oxygène est introdui dans le four par des buses.

3. Procédé suivant la revendication 1, **caracterisé en ce qu'**il consiste à envoyer le DRI à des températures de l'ordre de 300 à 1000°C dans le four.

4. Procédé suivant la revendication 1, **caracterisé en ce que** le bain de fer a la qualité de la fonte ou de l'acier.
